# EUROPÄISCHE PATENTSCHRIFT

(11) **EP 3 269 913 B1**
(45) Veröffentlichungstag und Bekanntmachung des Hinweises auf die Patenterteilung: **07.11.2018**
(21) Anmeldenummer: 17179553.7
(22) Anmeldetag: 04.07.2017
(51) Int. Cl.: E05F 15/40, B62D 35/00, E05F 15/42, E05F 15/43, E05F 15/611

(54) **KRAFTFAHRZEUG**
MOTOR VEHICLE
VÉHICULE AUTOMOBILE

(30) Priorität: 15.07.2016 DE 102016113084
(43) Veröffentlichungstag der Anmeldung: 17.01.2018
(73) Patentinhaber: REHAU AG + Co, 95111 Rehau (DE)
(72) Erfinder: Müller, Claus, 95028 Hof (DE); Löffler, Andreas, 95111 Rehau (DE); Leister, Christian, 95030 Hof (DE)

(56) Entgegenhaltungen:
- DE-A1-102011 112 684
- DE-A1-102013 010 993
- DE-A1-102013 208 607
- US-A1- 2016 159 412

## Beschreibung

Die vorliegende Erfindung betrifft ein Kraftfahrzeug mit einer heckseitig angeordneten und nach außen schwenkbar angelenkten Tür oder Klappe, mit einer mit der Tür oder Klappe verbundenen Antriebsvorrichtung, die bei Betätigung einer entsprechenden Schaltvorrichtung die Tür oder Klappe automatisch öffnet, mit einer die Antriebsvorrichtung steuernden Steuereinheit und wenigstens einem mit der Steuereinheit verbundenen Abstandssensor, wobei die Steuereinheit in Abhängigkeit zu einem, mittels des Abstandssensors ermittelten, Abstand zu einem über dem Kraftfahrzeug befindlichen dachseitigen Hindernis einen maximal möglichen Schwenkwinkel und/oder die maximal mögliche Höhe der geöffneten Tür oder Klappe vorgibt, wobei die Tür oder Klappe in Folge solange durch die Antriebsvorrichtung nach außen verschwenkbar ist, bis der maximal mögliche Schwenkwinkel und/oder die maximal mögliche Höhe erreicht ist.

Aus dem Stand der Technik ist eine Vielzahl gattungsgemäßer Kraftfahrzeuge bekannt. Beispielhaft beschreiben die DE 10 2007 043 477 A1, die DE 10 2011 087 315 A1, die DE 10 2013 208 607 A1, die DE 10 2011 112 684 A1, die DE 198 13 025 A1, die DE 10 2012 024 931 A1, die US 2016/159412 A1 sowie die EP 1 422 366 A2 entsprechende Kraftfahrzeuge.

In dem Stand der Technik werden Abstandssensoren gewählt, die sich sichtbar an der Tür oder Klappe des Kraftfahrzeuges befinden und insofern das ästhetische Erscheinungsbild des Kraftfahrzeuges beeinträchtigen. Um den Abstandssensor unauffälliger zu gestalten, lehren die DE 10 2013 217 302 A1, die DE 10 2009 012 889 A1 und die EP 1 780 360 A1 den Abstandssensor in den Heckscheibenwischer bzw. in die Heckscheibe selbst zu integrieren. Entsprechende Systeme sind jedoch aufwendig und können sehr leicht beschädigt werden, z.B. durch Steinschlag oder in einer Waschanlage.

DE 10 2013 010993 A1 offenbart ein Kraftfahrzeug nach dem Oberbegriff des Anspruchs 1.

Aufgabe der vorliegenden Erfindung ist es daher, ein zu den gattungsgemäßen Kraftfahrzeugen alternatives Kraftfahrzeug anzugeben, welches einen verbesserten ästhetischen Eindruck und einen besseren Schutz des Abstandssensors vor Beschädigungen gewährleistet.

Die Aufgabe wird vorliegend gelöst durch ein Kraftfahrzeug nach Anspruch 1 mit:
- einer heckseitig angeordneten und nach außen schwenkbar angelenkten Tür oder Klappe,
- einer mit der Tür oder Klappe verbundenen Antriebsvorrichtung, die bei Betätigung einer entsprechenden Schaltvorrichtung die Tür oder Klappe automatisch öffnet,
- einer die Antriebsvorrichtung steuernden Steuereinheit und wenigstens einem mit der Steuereinheit verbundenen Abstandssensor, wobei die Steuereinheit in Abhängigkeit zu einem, mittels des Abstandssensor ermittelten, Abstand zu einem über dem Kraftfahrzeug befindlichen dachseitigen Hindernis einen maximal möglichen Schwenkwinkel und/oder die maximal mögliche Höhe der geöffneten Tür oder Klappe vorgibt, wobei die Tür oder Klappe in Folge solange durch die Antriebsvorrichtung nach außen verschwenkbar ist, bis der maximal mögliche Schwenkwinkel und/oder die maximal mögliche Höhe erreicht ist,
wobei der Abstandssensor unterhalb eines reversibel verfahrbaren Schildes einer Luftablenkvorrichtung, insbesondere eines Heckspoilers, angeordnet ist, wobei zur Bestimmung des Abstandes zu dem Hindernis das Schild soweit verfahrbar ist, dass der Abstandssensor freiliegt.

Das erfindungsgemäße Kraftfahrzeug zeichnet sich dadurch aus, dass der Abstandssensor nur dann sichtbar wird, wenn dieser zur Bestimmung des Abstandes zu einem über dem Kraftfahrzeug befindlichen dachseitigen Hindernis benötigt wird und ansonsten bei einem stehenden Fahrzeug von außen weder sichtbar noch zugänglich ist. Hierdurch kommt es zu keiner Störung des ästhetischen Eindrucks des Kraftfahrzeuges durch den Abstandssensor, noch zu einer Möglichkeit den Abstandssensor bewusst oder unbewusst zu beschädigen.

Das Schild ist soweit verfahrbar, dass der Abstandssensor so freiliegt, dass die Abstrahl- und/oder Empfangsrichtung des Abstandssensors nicht durch das Schild gestört ist.

Der Abstandssensor kann insbesondere ein Ultraschallsensor oder ein Radarsensor oder ein optischer Sensor oder ein stereooptischer Sensor oder ein LiDaR-Sensor (Light detection and ranging-Sensor) sein. Insbesondere der Einsatz von Ultraschallsensoren hat sich für das erfindungsgemäße Kraftfahrzeug als besonders geeignet herausgestellt.

Die Antriebsvorrichtung kann einen Stellmotor, einen Hydraulikzylinder und/oder einen Pneumatikzylinder umfassen. Entsprechende Antriebsvorrichtungen sind aus dem Stand der Technik bekannt.

Die Antriebsvorrichtung der Tür oder Klappe kann einen Winkelsensor zur Erfassung des Schwenkwinkels der Tür oder Klappe aufweisen. Mittels des Winkelsensors wird der Schwenkwinkel der Tür oder Klappe erfasst und bei Erreichen des maximal möglichen Schwenkwinkels bzw. der maximal möglichen Höhe die Antriebsvorrichtung abgeschaltet.

Die Schaltvorrichtung kann einen Schalter im Bereich des Fahrersitzplatzes und/oder einen Schalter im Bereich der Tür oder Klappe und/oder einen Schalter im Bereich der hinteren Stoßfängerverkleidung und/oder einen Schalter einer Fernbedienung umfassen. Ein Schalter im Bereich der hinteren Stoßfängerverkleidung kann insbesondere ein auf eine Bewegung einer Person reagierender Schalter sein (z.B. eine schwenkende Fußbewegung unterhalb der Stoßfängerverkleidung).

In der Steuereinheit kann ein kraftfahrzeugspezifischer Abstand hinterlegt sein, bei dessen Überschreitung die Tür oder Klappe nicht mehr mit dem Hindernis kollidieren kann, sodass bei Erreichen oder Überschreiten dieses spezifischen Abstandes der maximal mögliche Schwenkwinkel dem spezifischen Endöffnungsschwenkwinkel der Tür oder Klappe entspricht. Ein spezifischer Endöffnungsschwenkwinkel ist definiert als der Schwenkwinkel, bei welchem die Tür oder Klappe durch eine mechanische Begrenzung nicht weiter geöffnet werden kann.

Die Luftablenkvorrichtung kann Teil der Tür oder Klappe oder Teil des Dachs des Kraftfahrzeuges sein.

Die vorliegende Aufgabe der Erfindung wird auch durch ein Verfahren nach Anspruch 7 zur Absicherung einer heckseitig an einem Kraftfahrzeug angeordneten und nach außen schwenkbar angelenkten Tür oder Klappe gelöst. Das Verfahren ist wie folgt gekennzeichnet:
Verfahren zur Absicherung einer heckseitig an einem Kraftfahrzeug angeordneten und nach außen schwenkbar angeordneten Tür oder Klappe, mit
- einer mit der Tür oder Klappe verbundenen Antriebsvorrichtung, die bei Betätigung einer entsprechenden Schaltvorrichtung die Tür oder Klappe automatisch öffnet,
- einer die Antriebsvorrichtung steuernden Steuereinheit und wenigstens einem mit der Steuereinheit verbundenen Abstandssensor, wobei die Steuereinheit in Abhängig zu einem, mittels des Abstandssensor ermittelten, Abstand zu einem über dem Kraftfahrzeug befindlichen dachseitigen Hindernis einen maximal möglichen Schwenkwinkel und/oder die maximal mögliche Höhe der geöffneten Tür oder Klappe vorgibt, wobei die Tür oder Klappe infolge solange durch die Antriebsvorrichtung nach außen verschwenkt wird, bis der maximal mögliche Schwenkwinkel und/oder die maximal mögliche Höhe erreicht ist,
wobei der Abstandssensor unterhalb eines reversibel verfahrbaren Schildes einer Luftablenkvorrichtung, insbesondere eines Heckspoilers, angeordnet ist, wobei zur Bestimmung des Abstandes zu dem Hindernis das Schild soweit verfährt, dass der Abstandssensor frei liegt.

Bei dem Verfahren kann bei Betätigung der Schaltvorrichtung zunächst das Schild verfahren und die Antriebsvorrichtung kann die Tür oder Klappe erst nach der Ermittlung des Abstandes zu dem über dem Kraftfahrzeug befindlichen dachseitigen Hindernis öffnen.

Der Abstandssensor kann ein Ultraschallsensor oder ein Radarsensor oder ein optischer Sensor oder ein stereooptischer Sensor oder ein LiDaR-Sensor (Light detection and ranging-Sensor) sein.

Die Antriebsvorrichtung kann einen Stellmotor, einen Hydraulikzylinder und/oder einen Pneumatikzylinder umfassen.

Die Antriebsvorrichtung der Tür oder Klappe kann einen Winkelsensor zur Erfassung des Schwenkwinkels der Tür oder Klappe aufweisen und das Erreichen des maximal möglichen Schwenkwinkels und/oder der maximal möglichen Höhe kann mittels des Winkelsensors erfasst und das Öffnen der Tür oder Klappe gestoppt werden.

Die Schaltvorrichtung kann einen Schalter im Bereich des Fahrersitzplatzes und/oder einen Schalter im Bereich der Tür oder Klappe und/oder einen Schalter im Bereich der hinteren Stoßfängerverkleidung und/oder einen Schalter einer Fernbedienung umfassen.

Die Luftablenkvorrichtung kann Teil der Tür oder Klappe oder Teil des Dachs des Kraftfahrzeuges sein.

Die Erfindung wird anhand von Ausführungsbeispielen näher erläutert. Gleiche oder funktionsgleiche Elemente sind mit den gleichen Bezugszeichen versehen.

Es zeigen:
- Fig. 1 bis 4:: ein Kraftfahrzeug unterhalb eines dachseitigen Hindernisses;
- Fig. 5 bis 7:: mögliche Verbaupositionen der Luftablenkvorrichtung an einem Kraftfahrzeug;
- Fig. 8 bis 10:: den oberen Bereich einer heckseitigen Tür oder Klappe und das Schild in verschiedenen Ausfahrzuständen.

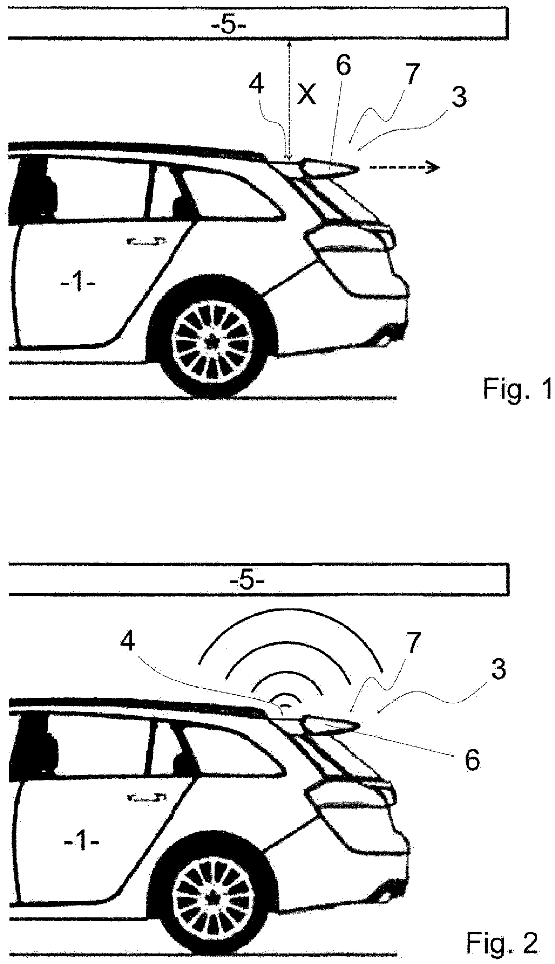

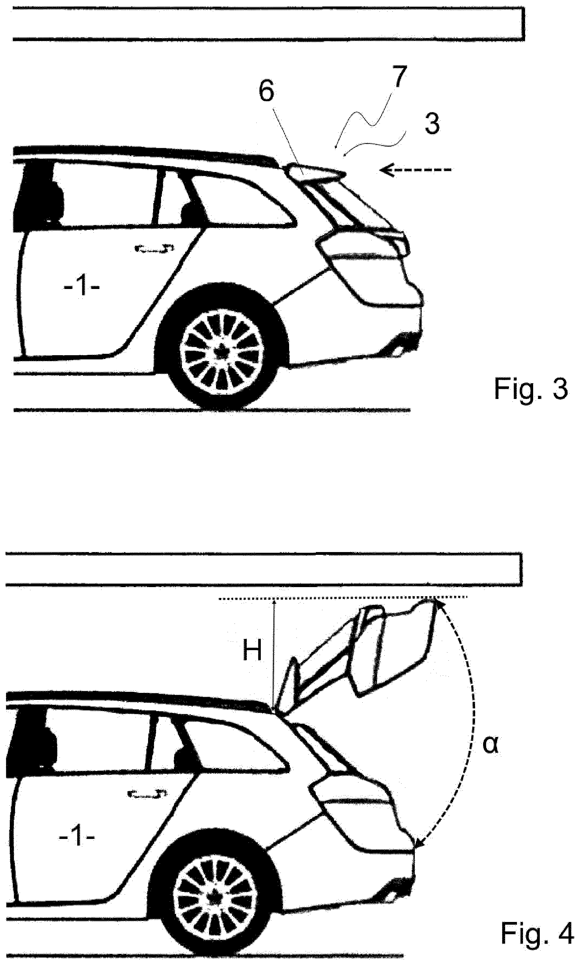

Die Fig. 1 bis Fig. 4 zeigen einen hinteren Teil eines Kraftfahrzeuges 1 mit einer heckseitig angeordneten und nach außen schwenkbar angelenkten Tür oder Klappe 2 (Verschwenkung - vgl. Fig. 4). Eine mit der Tür oder Klappe 2 verbundene Antriebsvorrichtung, die bei Betätigung einer entsprechenden Schaltvorrichtung die Tür oder Klappe 2 automatisch öffnet, ist hier nicht näher dargestellt. Dass Kraftfahrzeug 1 umfasst ferner eine die Antriebsvorrichtung steuernde Steuereinheit 3 und wenigstens ein mit der Steuereinheit 3 verbundenen Abstandssensor 4, wobei die Steuereinheit 3 in Abhängigkeit zu einem, mittels des Abstandsensors 4 ermittelten, Abstandes X (vgl. Fig. 1) zu einem über dem Kraftfahrzeug 1 befindlichen dachseitigen Hindernis 5 einen maximal möglichen Schwenkwinkel α und/oder die maximal mögliche Höhe H der geöffneten Tür oder Klappe 2 vorgibt. In diesem Fall befindet sich die Steuereinheit 3 innerhalb der Stützstruktur der Luftablenkvorrichtung 7 kann aber an jeder beliebigen Stelle des Kraftfahrzeugs 1 angeordnet sein.

In den Figuren 1 und 2 ist zu erkennen, dass der Abstandssensor 4 unterhalb eines reversibel verfahrbaren Schildes 6 einer Luftablenkvorrichtung 7, insbesondere eines Heckspoilers 7, angeordnet ist, wobei zur Bestimmung des Abstandes X zu dem Hindernis 5 das Schild 6 soweit verfahrbar ist, dass der Abstandssensor 4 freiliegt (vgl. Fig. 2). In Fig. 2 ist schematisch das Abstrahlsignal des Abstandssensors 4 angedeutet, welches zur Bestimmung des Abstandes X zu dem Hindernis 5 ausgesendet wird. Die Tür oder Klappe 2 ist infolge solange durch die Antriebsvorrichtung nach außen verschwenkbar, bis der maximal mögliche Schwenkwinkel α und/oder die maximale mögliche Höhe H erreicht ist (vgl. Fig. 3 und 4). Der Abstandssensor 4 kann ein Ultraschallsensor oder ein Radarsensor oder ein optischer Sensor oder ein stereooptischer Sensor eine LiDaR-Sensor sein. Die Antriebsvorrichtung kann einen Stellmotor, einen Hydraulikzylinder und/oder einen Pneumatikzylinder umfassen. Die Antriebsvorrichtung der Tür oder Klappe 2 weist einen Winkelsensor zur Erfassung des Schwenkwinkels α der Tür oder Klappe 2 auf. Die Schaltvorrichtung kann einen Schalter im Bereich des Fahrersitzplatzes und/oder einen Schalter im Bereich der Tür oder Klappe 2 und/oder einen Schalter im Bereich der hinteren Stoßfängerverkleidung und/oder einen Schalter einer Fernbedienung umfassen. In der Steuereinheit 3 ist ein Kraftfahrzeug 1 spezifischer Abstand hinterlegt, bei dessen Überschreitung die Tür oder Klappe 2 nicht mehr mit dem Hindernis kollidieren kann, sodass bei Erreichen oder Überschreiten dieses spezifischen Abstands der maximal mögliche Schwenkwinkel α dem spezifischen Endöffnungsschwenkwinkel der Tür oder Klappe 2 entspricht.

In den Figuren 1 bis 4 ist der Ablauf des erfindungsgemäßen Verfahrens zur Absicherung einer heckseitig an einem Kraftfahrzeug angeordneten und nach außen schwenkbar angelenkten Tür oder Klappe 2 dargestellt, mit:
- einer mit der Tür oder Klappe 2 verbundenen Antriebsvorrichtung, die bei Betätigung einer entsprechenden Schaltvorrichtung die Tür oder Klappe 2 automatisch öffnet,
- einer die Antriebsvorrichtung steuernden Steuereinheit 3 und wenigstens einem mit der Steuereinheit 3 verbundenen Abstandssensor 4, wobei die Steuereinheit 3 in Abhängigkeit zu einem, mittels des Abstandsensors 4 ermittelten, Abstand X zu einem über dem Kraftfahrzeug 1 befindlichen dachseitigen Hindernis 5 einen maximal möglichen Schwenkwinkel α und/oder die maximale mögliche Höhe H der geöffneten Tür oder Klappe 2 vorgibt,
wobei die Tür oder Klappe 2 in Folge solange durch die Antriebsvorrichtung nach außen verschwenkt wird, bis der maximal mögliche Schwenkwinkel α und/oder die maximale mögliche Höhe H erreicht ist, wobei der Abstandssensor 4 unterhalb eines reversibel verfahrbaren Schildes 6 einer Luftablenkvorrichtung 7, insbesondere eines Heckspoilers 7, angeordnet ist, wobei zur Bestimmung des Abstandes X zu dem Hindernis 5 das Schild 6 soweit verfährt, dass der Abstandssensor 4 freiliegt.

In Fig. 3 ist gezeigt, dass nach der Ermittlung des Abstandes X zu einem über dem Kraftfahrzeug 1 befindlichen dachseitigen Hindernis 5 das reversibel verfahrbare Schild 6 wieder in seine Nichtgebrauchsstellung zurückfährt, bevor die Antriebsvorrichtung die Tür oder Klappe 2 öffnet. Bei Betätigung der Schaltvorrichtung verfährt demnach zunächst das Schild 6 und die Antriebsvorrichtung öffnet die Tür oder Klappe 2 erst nach der Ermittlung des Abstandes X zu dem über dem Kraftfahrzeug 1 befindlichen dachseitigen Hindernis 5 und nachdem das Schild 6 wieder zurückgefahren ist. Entgegen der Fig. 3 ist es jedoch auch möglich, dass die Tür oder Klappe 2 bereits öffnet, während das Schild 6 in seine Nichtgebrauchsstellung zurückfährt. Wie bereits beschrieben, kann auch bei dem Verfahren der Abstandssensor 4 ein Ultraschallsensor oder ein Radarsensor oder ein optischer Sensor oder eine stereooptischer Sensor oder ein LiDaR-Sensor sein. Ebenso wie bereits beschrieben kann die Antriebsvorrichtung einen Stellmotor, einen Hydraulikzylinder und/oder einen Pneumatikzylinder umfassen.

Die Antriebsvorrichtung der Tür oder Klappe 2 weist einen Winkelsensor zur Erfassung des Schwenkwinkels α der Tür oder Klappe 2 auf. Bei Erreichen des maximal möglichen Schwenkwinkels α und/oder der maximal möglichen Höhe H mittels des Winkelsensors wird das Öffnen der Tür oder Klappe 2 gestoppt. Wie ebenfalls bereits beschrieben, kann die Schaltvorrichtung einen Schalter im Bereich des Fahrersitzplatzes und/oder einen Schalter im Bereich der Tür oder Klappe 2 und/oder einen Schalter im Bereich der hinteren Stoßfängerverkleidung und/oder einen Schalter einer Fernbedienung umfassen.

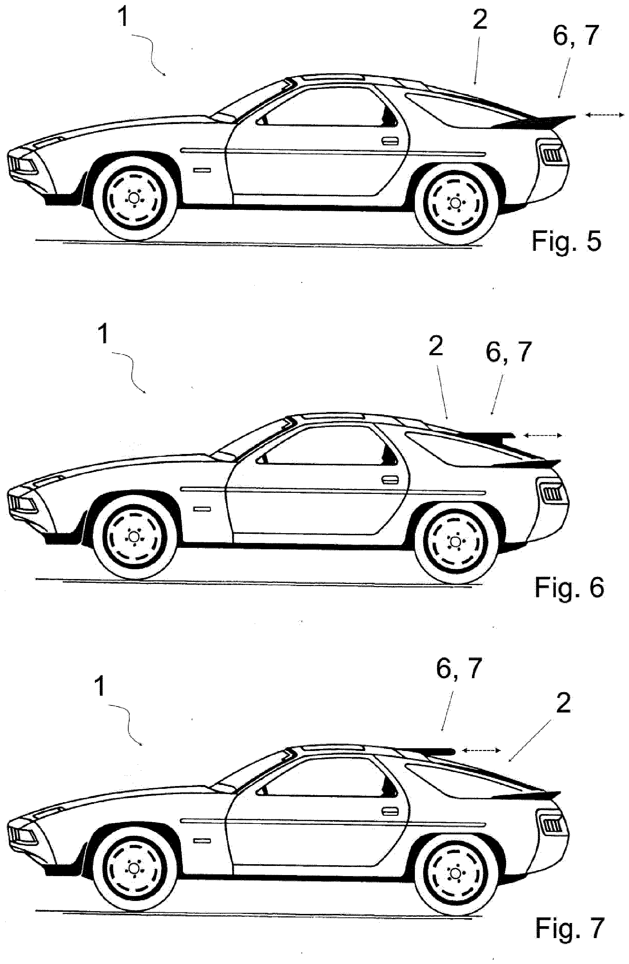

In den Figuren 5 bis 7 sind mögliche Verbaupositionen der Luftablenkvorrichtung 7 an dem Kraftfahrzeug 1 dargestellt. In Fig. 5 befindet sich die Luftablenkvorrichtung 7 und das reversibel verfahrbare Schild 6 am vom Anlenkpunkt der Tür oder Klappe 2 am weitesten entfernten Ende der Tür oder Klappe 2.

Fig. 6 zeigt, dass die Luftablenkvorrichtung 7 und das reversibel verfahrbare Schild 6 in etwa mittig auf der Tür oder Klappe 2 positioniert oder angeordnet werden kann.

Fig. 7 zeigt die Verbauposition des reversibel verfahrbaren Schildes 6 der Luftablenkvorrichtung 7 im Bereich des Anlenkpunktes der Tür oder Klappe 2.

In allen Fällen aus Fig. 1 bis Fig. 7 ist die Luftablenkvorrichtung 7 Teil der Tür oder Klappe 2.

Alternativ kann die Luftablenkvorrichtung 7 auch Teil des Dachs des Kraftfahrzeuges 1 sein.

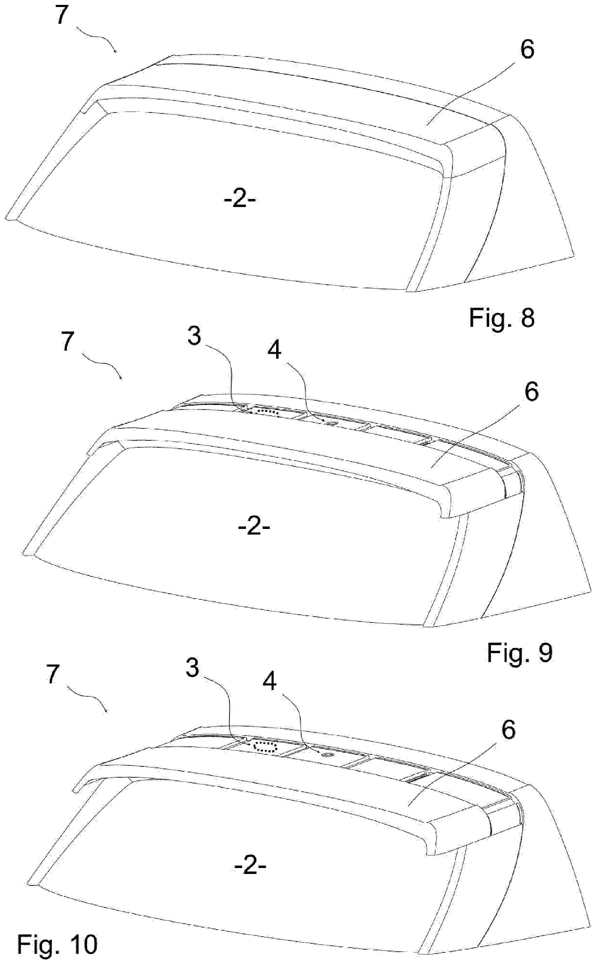

In den Figuren 8 bis 10 ist ein oberer Bereich einer schwenkbar an einem Kraftfahrzeug 1 angelenkten Tür oder Klappe 2 dargestellt. Hier ist noch einmal im Detail der Abstandssensor 4 dargestellt, der unterhalb eines reversibel verfahrbaren Schildes 6 einer Luftablenkvorrichtung 7, insbesondere eines Heckspoilers 7, angeordnet ist, wobei zur Bestimmung des Abstandes X zu einem Hindernis 5 (vgl. beispielhaft Fig. 1) das Schild 6 soweit verfährt, dass der Abstandssensor 4 freiliegt (vgl. Fig. 10). Auch in diesem Fall befindet sich die Steuereinheit 3 innerhalb der Stützstruktur der Luftablenkvorrichtung 7 kann aber an jeder beliebigen Stelle des Kraftfahrzeugs 1 angeordnet sein.

## Patentansprüche

1. Kraftfahrzeug (1) mit:
- einer heckseitig angeordneten und nach außen schwenkbar angelenkten Tür oder Klappe (2),
- einer mit der Tür oder Klappe (2) verbundenen Antriebsvorrichtung, die bei Betätigung einer entsprechenden Schaltvorrichtung die Tür oder Klappe (2) automatisch öffnet,
- einer die Antriebsvorrichtung steuernden Steuereinheit (3) und wenigstens einem mit der Steuereinheit (3) verbundenen Abstandssensor (4), wobei die Steuereinheit (3) in Abhängigkeit zu einem, mittels des Abstandsensors (4) ermittelten, Abstandes (X) zu einem über dem Kraftfahrzeug (1) befindlichen dachseitigen Hindernis (5) einen maximal möglichen Schwenkwinkel (a) und/oder die maximale mögliche Höhe (H) der geöffneten Tür oder Klappe (2) vorgibt,
wobei die Tür oder Klappe (2) in Folge solange durch die Antriebsvorrichtung nach außen verschwenkbar ist, bis der maximal mögliche Schwenkwinkel (a) und/oder die maximale mögliche Höhe (H) erreicht ist,
**dadurch gekennzeichnet, dass**
der Abstandssensor (4) unterhalb eines reversibel verfahrbaren Schildes (6) einer Luftablenkvorrichtung (7), insbesondere eines Heckspoilers (7), angeordnet ist, wobei zur Bestimmung des Abstandes (X) zu dem Hindernis (5) das Schild (6) soweit verfahrbar ist, dass der Abstandssensor (4) freiliegt.

2. Kraftfahrzeug nach Anspruch 1, **dadurch gekennzeichnet, dass** der Abstandssensor (4) ein Ultraschallsensor oder ein Radarsensoren oder ein optischer Sensor oder ein stereooptischer Sensor oder ein LiDaR (Light detection and ranging) Sensor ist.

3. Kraftfahrzeug nach einem der Ansprüche 1 oder 2, **dadurch gekennzeichnet, dass** die Antriebsvorrichtung einen Stellmotor, einen Hydraulikzylinder und/oder einen Pneumatikzylinder umfasst.

4. Kraftfahrzeug nach einem der vorstehenden Ansprüche, **dadurch gekennzeichnet, dass** die Antriebsvorrichtung der Tür oder Klappe (2) einen Winkelsensor zur Erfassung des Schwenkwinkels (α) der Tür oder Klappe (2) aufweist.

5. Kraftfahrzeug (1) nach einem der vorstehenden Ansprüche, **dadurch gekennzeichnet, dass** die Schaltvorrichtung einen Schalter im Bereich des Fahrersitzplatzes und/oder im Bereich der Tür oder Klappe (2) und/oder im Bereich der hinteren Stoßfängerverkleidung und/oder einen Schalter einer Fernbedienung umfasst.

6. Kraftfahrzeug (1) nach einem der vorstehenden Ansprüche, **dadurch gekennzeichnet, dass** in der Steuereinheit (3) ein Kraftfahrzeug (1) spezifischer Abstand hinterlegt ist, bei dessen Überschreitung die Tür oder Klappe (3) nicht mehr mit dem Hindernis kollidieren kann, sodass bei Erreichen oder Überschreiten dieses spezifischen Abstandes der maximal mögliche Schwenkwinkel (α) dem spezifischen Endöffnungsschwenkwinkel der Tür oder Klappe (2) entspricht.

7. Verfahren zur Absicherung einer heckseitig an einem Kraftfahrzeug (1) angeordneten und nach außen schwenkbar angelenkten Tür oder Klappe (2), mit:
- einer mit der Tür oder Klappe (2) verbundenen Antriebsvorrichtung, die bei Betätigung einer entsprechenden Schaltvorrichtung die Tür oder Klappe (2) automatisch öffnet,
- einer die Antriebsvorrichtung steuernden Steuereinheit (3) und wenigstens einem mit der Steuereinheit (3) verbundenen Abstandssensor (4), wobei die Steuereinheit (3) in Abhängigkeit zu einem, mittels des Abstandsensors (4) ermittelten, Abstand (X) zu einem über dem Kraftfahrzeug (1) befindlichen dachseitigen Hindernis (5) einen maximal möglichen Schwenkwinkel (α) und/oder die maximale mögliche Höhe (H) der geöffneten Tür oder Klappe (2) vorgibt,
wobei die Tür oder Klappe (2) in Folge solange durch die Antriebsvorrichtung nach außen verschwenkt wird, bis der maximal mögliche Schwenkwinkel (α) und/oder die maximale mögliche Höhe (H) erreicht ist,
**dadurch gekennzeichnet, dass**
der Abstandssensor (4) unterhalb eines reversibel verfahrbaren Schildes (6) einer Luftablenkvorrichtung (7), insbesondere eines Heckspoilers (7), angeordnet ist, wobei zur Bestimmung des Abstandes (X) zu dem Hindernis (5) das Schild (6) soweit verfährt, dass der Abstandssensor (4) freiliegt.

8. Verfahren nach Anspruch 7, **dadurch gekennzeichnet, dass** bei Betätigung der Schaltvorrichtung zunächst das Schild (6) verfährt und die Antriebsvorrichtung die Tür oder Klappe (2) erst nach der Ermittlung des Abstands (X) zu dem über dem Kraftfahrzeug (1) befindlichen dachseitigen Hindernis (5) öffnet.

9. Verfahren nach einem der Ansprüche 7 oder 8, **dadurch gekennzeichnet, dass** der Abstandssensor (4) ein Ultraschallsensor oder ein Radarsensoren oder ein optischer Sensor oder ein stereooptischer Sensor oder ein LiDaR (Light detection and ranging) Sensor ist.

10. Verfahren nach einem der vorstehenden Ansprüche 7 bis 9, **dadurch gekennzeichnet, dass** die Antriebsvorrichtung einen Stellmotor, einen Hydraulikzylinder und/oder einen Pneumatikzylinder umfasst.

11. Verfahren nach einem der vorstehenden Ansprüche 7 bis 10, **dadurch gekennzeichnet, dass** die Antriebsvorrichtung der Tür oder Klappe (2) einen Winkelsensor zur Erfassung des Schwenkwinkels (α) der Tür oder Klappe (2) aufweist und das Erreichen des maximal möglichen Schwenkwinkels (α) und/oder der maximal möglichen Höhe (H) mittels des Winkelsensors erfasst und das Öffnen der Tür oder Klappe (2) gestoppt wird.

12. Verfahren nach einem der vorstehenden Ansprüche 7 bis 11, **dadurch gekennzeichnet, dass** die Schaltvorrichtung einen Schalter im Bereich des Fahrersitzplatzes und/oder im Bereich der Tür oder Klappe (2) und/oder im Bereich der hinteren Stoßfängerverkleidung und/oder einen Schalter einer Fernbedienung umfasst.

## Claims

1. A motor vehicle (1) having:
- a door or flap (2) which is arranged at the rear and hinged in an outwardly pivotable manner,
- a drive device connected to said door or flap (2), which opens said door or flap (2) automatically when a corresponding switching device is actuated,
- a control unit (3) controlling said drive device and at least one distance sensor (4) connected to said control unit (3), wherein said control unit (3) presets, as a function of a distance (X) from a roof-side obstacle (5) located above the motor vehicle (1) determined by means of said distance sensor (4), a maximum possible pivot angle (α) and/or the maximum possible height (H) of the open door or flap (2),
wherein as a result, said door or flap (2) can be pivoted outwards by said drive device until the maximal possible pivot angle (α) and/or the maximum possible height (H) is reached,
**characterised in that**
said distance sensor (4) is arranged below a reversibly movable shield (6) of an air deflector device (7), in particular a rear spoiler (7), wherein to determine the distance (X) from the obstacle (5) said shield (6) can be moved far enough for said distance sensor (4) to be exposed.

2. The motor vehicle according to claim 1, **characterised in that** the distance sensor (4) is an ultrasonic sensor or a radar sensor or an optical sensor or a stereo-optical sensor or a LiDAR (Light Detection and Ranging) sensor.

3. The motor vehicle according to one of claims 1 or 2, **characterised in that** the drive device comprises a servomotor, a hydraulic cylinder and/or a pneumatic cylinder.

4. The motor vehicle according to one of the preceding claims, **characterised in that** the drive device of the door or flap (2) has an angle sensor for detecting the pivot angle (α) of said door or flap (2).

5. The motor vehicle (1) according to one of the preceding claims, **characterised in that** the switching device comprises a switch in the region of the driver's seat and/or in the region of the door or flap (2) and/or in the region of the rear bumper fascia and/or a switch of a remote control.

6. The motor vehicle (1) according to one of the preceding claims, **characterised in that** in the control unit (3) a motor vehicle (1) specific distance is stored beyond which the door or flap (3) can no longer collide with the obstacle, so that when this specific distance is reached or exceeded, the maximum possible pivot angle (α) corresponds to the specific final open pivot angle of the door or flap (2).

7. A method of securing a door or flap (2) which is arranged on a motor vehicle (1) at the rear and which is hinged in an outwardly pivotable manner, having:
- a drive device connected to the door or flap (2), which opens the door or flap (2) automatically when a corresponding switching device is actuated,
- a control unit (3) controlling said drive device and at least one distance sensor (4) connected to said control unit (3), wherein said control unit (3) presets, as a function of a distance (X) from a roof-side obstacle (5) located above the motor vehicle (1) determined by means of said distance sensor (4), a maximum possible pivot angle (α) and/or the maximum possible height (H) of the open door or flap (2),
wherein as a result, said door or flap (2) is pivoted outwards by said drive device until the maximal possible pivot angle (α) and/or the maximum possible height (H) is reached,
**characterised in that**
said distance sensor (4) is arranged below a reversibly movable shield (6) of an air deflector device (7), in particular a rear spoiler (7), wherein to determine the distance (X) from the obstacle (5) said shield (6) moves far enough for said distance sensor (4) to be exposed.

8. The method according to claim 7, **characterised in that** when the switching device is actuated the shield (6) moves and the drive device opens the door or flap (2) only after the distance (X) from the roof-side obstacle (5) located above the motor vehicle (1) has been determined.

9. The method according to one of claims 7 or 8, **characterised in that** the distance sensor (4) is an ultrasonic sensor or a radar sensor or an optical sensor or a stereo-optical sensor or a LiDAR (Light detection and ranging) sensor.

10. The method according to one of the preceding claims 7 to 9, **characterised in that** the drive device comprises a servomotor, a hydraulic cylinder and/or a pneumatic cylinder.

11. The method according to one of the preceding claims 7 to 10, **characterised in that** the drive device of the door or flap (2) has an angle sensor for detecting the pivot angle (α) of said door or flap (2) and the reaching of the maximum possible pivot angle (α) and/or the maximum possible height (H) is determined by means of the angle sensor and the opening of the door or flap (2) is stopped.

12. The method according to one of the preceding claims 7 to 11, **characterised in that** the switching device comprises a switch in the region of the driver's seat and/or in the region of the door or flap (2) and/or in the region of the rear bumper fascia and/or a switch of a remote control.

## Revendications

1. Véhicule automobile (1) avec :
- une portière ou un hayon (2) agencé(e) à l'arrière et articulé(e) de manière à pouvant pivoter vers l'extérieur,
- un dispositif d'entraînement relié à la portière ou au hayon (2) qui ouvre automatiquement la portière ou le hayon (2) lors d'un actionnement d'un dispositif de commutation respectif,
- une unité de commande (3) contrôlant le dispositif d'entraînement et au moins un détecteur de distance (4) relié à l'unité de commande (3), ladite unité de commande (3) prédéfinissant, en fonction d'une distance (X) déterminée au moyen du détecteur de distance (4) par rapport à un obstacle (5) situé côté toit au-dessus du véhicule automobile (1), un angle de pivotement (α) maximum possible et/ou la hauteur (H) maximum possible de la portière ou du hayon (2) ouvert,
la portière ou le hayon (2) pouvant ensuite être pivoté(e) vers l'extérieur par le dispositif d'entraînement jusqu'à ce que l'angle de pivotement (α) maximum possible et/ou la hauteur (H) maximum possible soit atteint,
**caractérisé en ce que**
le détecteur de distance (4) est disposé en-dessous d'un panneau (6), déplaçable de manière réversible, d'un déflecteur d'air (7), en particulier d'un aileron arrière (7), le panneau (6) pouvant être déplacé jusqu'à ce que le détecteur de distance (4) soit exposé pour déterminer la distance (X) par rapport à l'obstacle (5).

2. Véhicule automobile selon la revendication 1, **caractérisé en ce que** le détecteur de distance (4) est un capteur à ultrasons ou un capteur radar ou un capteur optique ou un capteur stéréo-optique ou un capteur LiDaR (Light detection and ranging).

3. Véhicule automobile selon l'une des revendications 1 ou 2, **caractérisé en ce que** le dispositif d'entraînement comprend un servomoteur, un cylindre hydraulique et/ou un cylindre pneumatique.

4. Véhicule automobile selon l'une quelconque des revendications précédentes, **caractérisé en ce que** le dispositif d'entraînement de la portière ou du hayon (2) comprend un capteur angulaire pour détecter l'angle de pivotement (α) de la portière ou du hayon (2).

5. Véhicule automobile (1) selon l'une quelconque des revendications précédentes, **caractérisé en ce que** le dispositif de commutation comprend un interrupteur dans la zone de la place assise du conducteur et/ou dans la zone de la portière ou du hayon (2) et/ou dans la zone de l'habillage du pare-chocs arrière et/ou comprend un interrupteur d'une télécommande.

6. Véhicule automobile (1) selon l'une quelconque des revendications précédentes, **caractérisé en ce qu'**une distance spécifique au véhicule (1) est enregistrée dans l'unité de commande (3) qui empêche la portière ou le hayon (3) d'entrer en collision avec l'obstacle lorsqu'elle est dépassée par le haut, de telle sorte qu'en cas d'atteinte ou de dépassement par le haut de cette distance spécifique, l'angle de pivotement (α) maximum possible correspond à l'angle de pivotement de l'ouverture finale de la portière ou du hayon (2).

7. Procédé de sécurisation d'une portière ou d'un hayon (2) agencé(e) à l'arrière et articulé(e) de manière à pouvant pivoter vers l'extérieur, avec :
- un dispositif d'entraînement relié à la portière ou au hayon (2) qui ouvre automatiquement la portière ou le hayon (2) lorsqu'un dispositif de commutation respectif est actionné,
- une unité de commande (3) contrôlant le dispositif d'entraînement et au moins un détecteur de distance (4) relié à l'unité de commande (3), ladite unité de commande prédéfinissant, en fonction d'une distance (X) calculée au moyen du détecteur de distance (4) par rapport à un obstacle (5) situé côté toit au-dessus du véhicule automobile (1), un angle de pivotement (a) maximum possible et/ou la hauteur (H) maximum possible de la portière ou du hayon (2) ouvert,
la portière ou le hayon (2) pouvant ensuite être basculé vers l'extérieur par le dispositif d'entraînement jusqu'à ce que l'angle de pivotement (a) maximum possible et/ou la hauteur (H) maximum possible soit atteint,
**caractérisé en ce que**
le détecteur de distance (4) est disposé en-dessous d'un panneau (6), déplaçable de manière réversible, d'un déflecteur d'air (7), en particulier d'un aileron arrière (7), le panneau (6) étant déplacé jusqu'à ce que le détecteur de distance (4) soit dégagé pour déterminer la distance (X) par rapport à l'obstacle (5).

8. Procédé selon la revendication 7, **caractérisé en ce que**, lorsque le dispositif de commutation est actionné, le panneau (6) commence à se déplacer et le dispositif d'entraînement n'ouvre la portière ou le hayon (2) qu'après avoir déterminé la distance (X) par rapport à l'obstacle (5) se trouvant côté toit au-dessus du véhicule automobile (1).

9. Procédé selon l'une quelconque des revendications 7 ou 8, **caractérisé en ce que** le détecteur de distance (4) est un capteur à ultrasons ou un détecteur radar ou un capteur optique ou un capteur stéréo-optique ou un capteur LiDaR (Light detection and ranging).

10. Procédé selon l'une quelconque des revendications précédentes 7 à 9, **caractérisé en ce que** le dispositif d'entraînement comprend un servomoteur, un vérin hydraulique et/ou un cylindre pneumatique.

11. Procédé selon l'une quelconque des revendications précédentes 7 à 10, **caractérisé en ce que** le dispositif d'entraînement de la portière ou du hayon (2) présente un détecteur angulaire pour enregistrer l'angle de pivotement (α) de la portière ou du hayon (2) et **en ce que** l'atteinte de l'angle de pivotement (α) maximum possible et/ou de la hauteur (H) maximum possible est enregistrée au moyen du détecteur angulaire et l'ouverture de la portière ou du hayon (2) est stoppée.

12. Procédé selon l'une quelconque des revendications précédentes 7 à 11, **caractérisé en ce que** le dispositif de commutation comprend un interrupteur dans la zone de la place assise du conducteur et/ou dans la zone de la portière ou du hayon (2) et/ou dans la zone de l'habillage du pare-chocs arrière et/ou un interrupteur de télécommande.
